# EUROPÄISCHE PATENTANMELDUNG

(11) **EP 4 699 960 A1**
(43) Veröffentlichungstag der Anmeldung: **25.02.2026**
(21) Anmeldenummer: 25195862.5
(22) Anmeldetag: 14.08.2025
(51) Int. Cl.: B65G 13/04, B65G 13/075, B65G 13/00, B65G 13/07

(54) **ROLLENBAHN ZUM FÖRDERN VON FÖRDERGUT SOWIE VERFAHREN ZUM BETRIEB DER ROLLENBAHN**

(30) Priorität: 22.08.2024 DE 102024124038
(71) Anmelder: König Maschinenbau GmbH, 68542 Heddesheim (DE)
(72) Erfinder: Antes, Patrick, 64646 Heppenheim (DE)
(74) Vertreter: Bauer PSU PartG mbB

(57) **Zusammenfassung**

Die vorliegende Erfindung betrifft eine Rollenbahn (1) zum Fördern von Fördergut (2, 3, 4), insbesondere in Form von diskreten Ladungsträgern, umfassend ein Maschinengestell, eine Vielzahl von antreibbaren, vorzugsweise langgestreckten, zylinderförmigen Förderrollen (5), zumindest zwei Führungselemente, eine Vielzahl von Ritzeln (7), zumindest eine umlaufende Antriebskette (8), mit der die Ritzel (7) antreibbar sind, zumindest eine Antriebseinrichtung zum Antrieb der Antriebskette (8), mindestens eine Schalteinrichtung (9), mit der ein Kraftschluss zwischen der Antriebskette (8) und den Förderrollen (5) ein- und ausschaltbar ist, wobei die Schalteinrichtung (9) zumindest ein Schaltelement (10) aufweist, das dazu vorgesehen und eingerichtet ist, von einer Passivstellung in eine Aktivstellung und umgekehrt überführt zu werden.

Um die Rollenbahn (1) dahingehend weiterzuentwickeln, dass mittels der Rollenbahn (1) ein Kraftschluss zwischen der Antriebskette (8) und den Förderrollen (5) zuverlässig ein- und ausschaltbar ist, ist erfindungsgemäß vorgesehen, dass mittels einer Überführung des Schaltelements (10) von der Aktivstellung in die Passivstellung die Antriebskette (8) von einer Eingriffsstellung in eine Freilaufstellung und umgekehrt überführbar ist, wobei die Antriebskette (8) in der Eingriffsstellung mit mehreren Ritzeln (7) in Eingriff ist, so dass mittels der Antriebseinrichtung ein Drehmoment über die Antriebskette (8) in die dem Schaltelement (10) zugeordneten Ritzel (7) einleitbar ist, und somit eine Rotation der dem Schaltelement (10) zugeordneten Förderrollen (5) bewirkt, und wobei die Antriebskette (8) in der Freilaufstellung mit den dem Schaltelement (10) zugeordneten Ritzeln (7) außer Eingriff ist und zu diesen einen lichten Freilaufabstand (22) aufweist.

Ferner betrifft die vorliegende Erfindung ein Verfahren zum Betrieb der erfindungsgemäßen Rollenbahn (1).

## Beschreibung

### Einleitung

Die vorliegende Erfindung betrifft eine Rollenbahn zum Fördern von Fördergut, insbesondere in Form von diskreten Ladungsträgern, gemäß dem Oberbegriff von Anspruch 1. Ferner betrifft die Erfindung ein Verfahren zum Betrieb der Rollenbahn zum Fördern von Fördergut, insbesondere in Form von diskreten Ladungsträgern, gemäß dem Oberbegriff von Anspruch 10.

Die Rollenbahn umfasst
- ein Maschinengestell,
- eine Vielzahl von antreibbaren, vorzugsweise langgestreckten, zylinderförmigen Förderrollen, deren jeweiligen nach oben gerichteten Oberflächen gemeinsam eine Rollenebene bilden, die eine Förderebene definiert, und wobei jede Förderrolle eine vorzugsweise annährend horizontal ausgerichtete Drehachse aufweist, und benachbarte Drehachsen gemeinsam eine Achsebene definieren,
- eine Vielzahl von Ritzeln, die jeweils koaxial zu der zugeordneten Förderrolle sowie an deren Stirnseite oder - in axiale Richtung versetzt außerhalb einer vertikalen Projektion der Rollenebene - neben deren Stirnseite sowie vorzugsweise außerhalb eines von der Rollenebene definierten Förderquerschnitts angeordnet sind,
- zumindest eine umlaufende Antriebskette, mit der die Ritzel antreibbar sind,
- zumindest eine Antriebseinrichtung zum Antrieb der Antriebskette,
- mindestens eine Schalteinrichtung, mit der ein Kraftschluss zwischen der Antriebskette und den Förderrollen ein- und ausschaltbar ist, wobei die Schalteinrichtung zumindest ein Schaltelement aufweist, das dazu eingerichtet ist, von einer Passivstellung in eine Aktivstellung und umgekehrt überführt zu werden.

### Stand der Technik

Insbesondere in der Getränkeindustrie wird Fördergut in Form von diskreten Ladungsträgern, wie beispielsweise Mehrweg-Getränkekisten oder Ladungsträgern in Form von Paletten auf Rollenbahnen, gefördert. Die aus dem Stand der Technik bekannten Rollenbahnen besitzen jeweils eine Vielzahl von angetriebenen Rollen, deren nach oben gerichteten Oberflächen eine Bahn bilden, die durch geeignete Führungselemente nach rechts und links begrenzt ist und somit einen geführten Transport der Getränkekisten bzw. auch palettenförmiger Ladungsträger ermöglicht.

Der Antrieb jeder einzelnen Förderrolle der Rollenbahn erfolgt typischerweise mit Hilfe jeweils eines Ritzels, das stirnseitig an jeder Förderrolle angeordnet ist und mit einer unterhalb der Rollenbahn angeordneten und parallel zu dieser verlaufenden Rollenkette zusammenwirkt.

In der DE 15 06 905 wird eine derartige Fördereinrichtung zur Aufnahme einer Last mit Hilfe eines Tragorgans beschrieben, wobei das Tragorgan aus Förderrollen gebildet ist. Die Förderrollen werden mittels Reibung von einem Plattengliederband angetrieben. Das Plattengliederband wird wiederum mittels einer mit einem Motorantrieb verbundenen Rollenkette angetrieben. Die Tragvorrichtung ist gänzlich oder lediglich in bestimmten Längsabschnitten mit einer Vorrichtung zum vorübergehenden Anheben der Rollenachsen versehen. Die Vorrichtung ist dabei in Form einer Schiene ausgebildet, die verschiebbar ist. Die Schiene weist den jeweiligen Rollenachsen zugeordnete Nocken auf, die bei einer vertikalen Bewegung der Schiene dafür sorgen, dass sich die Förderrollen von dem Plattengliederband abheben. Mangels eines Kontakts mit dem Plattengliederband wird die Förderbewegung der auf den Rollen befindlichen Last somit augenblicklich unterbrochen. Das heißt, um eine Unterbrechung der Förderbewegung zu bewirken, werden die Förderrollen in eine vertikale Richtung weg von dem Plattengliederband angehoben.

In der DE 35 03 052 C1 wird eine Staurollenbahn beschrieben, bei der die Förderrollen mittels eines Radträgers von einer Freilaufstellung in eine Antriebsstellung und in umgekehrte Richtung überführbar sind. Hierzu weist die dort beschriebene Vorrichtung ein Zwischenzahnrad auf, das bei Vorliegen in der Antriebsstellung der Förderrollen mit einem Zahnriemen oder einer Antriebskette in Kontakt steht und somit eine Bewegung der Förderrollen bewirkt. Bei Vorliegen der Förderrollen in der Freistellung hingegen liegt kein Kontakt zwischen dem Zwischenzahnrad und dem Zahnriemen oder der Antriebskette vor. Das Zwischenzahnrad ist in der Freistellung von dem Zahnriemen oder der Antriebskette beabstandet. Die Überführung zwischen den beiden Stellungen erfolgt mittels eines als mechanisches Übertragungselement wirkenden Fühlers, der in die Bahn hineinragt, sodass die Überführung durch das zu transportierende Stückgut ausgelöst wird. Das heißt, wenn ein Stückgut den Fühler überfährt und der Fühler anschließend wieder freikommt, wird der Radträger in dem nachfolgenden Staurollenbahnabschnitt derart verschwenkt, dass die Tragrollen von der Freilaufstellung in die Antriebsstellung überführt werden.

Bei der Staurollenbahn gemäß der DE 26 50 205 A1 ist vorgesehen, dass die Antriebskette ständig im Eingriff mit einem Kettenrad ist, wobei das Kettenrad von den jeweils an der Staurolle befindlichen Zahnrädern entkoppelt werden kann, wenn ein zu transportierendes Fördergut einen zwischen zwei Rollen befindlichen Fühler überfährt.

Die in der DE 28 53 483 A1 beschriebene Staurollenbahn sieht ebenfalls Fühler vor, mittels dessen die Förderung von Fördergut gestoppt oder weitergeführt werden kann. Hierzu ist vorgesehen, dass jeweils zwei Ritzel je nach Ausgangslage ineinandergreifen, sodass die Förderrollen das Fördergut transportieren, oder in einem Abstand zueinander angeordnet sind, sodass die Förderung des Fördergutes gestoppt ist.

### Aufgabe

Der vorliegenden Erfindung liegt mithin die Aufgabe zu Grunde eine Rollenbahn bereitzustellen, mittels der ein Kraftschluss zwischen einer Antriebskette und den Förderrollen möglichst einfach und zuverlässig ein- und ausschaltbar ist.

### Lösung

Die zugrunde liegende Aufgabe wird erfindungsgemäß mittels einer Rollenbahn mit den Merkmalen der Anspruchs 1 gelöst. Vorteilhafte Ausgestaltungen ergeben sich aus den zugehörigen Unteransprüchen sowie der Beschreibung.

Die Rollenbahn zum Fördern von Fördergut zeichnet sich dadurch aus, dass mittels einer Überführung des Schaltelements von der Aktivstellung in die Passivstellung die Antriebskette von einer Eingriffsstellung in eine Freilaufstellung und umgekehrt überführbar ist, wobei die Antriebskette in der Eingriffsstellung mit mehreren Ritzeln in Eingriff ist, so dass mittels der Antriebseinrichtung ein Drehmoment über die Antriebskette in die dem Schaltelement zugeordneten Ritzel einleitbar ist, und somit eine Rotation der dem Schaltelement zugeordneten Förderrollen bewirkt, und wobei die Antriebskette in der Freilaufstellung mit den dem Schaltelement zugeordneten Ritzeln außer Eingriff ist und zu diesen einen lichten Freilaufabstand aufweist.

Erfindungsgemäß liegt zwischen der Antriebskette und den jeweils "geschalteten" Ritzeln eine Relativbeweglichkeit vor. Diese ist vorzugsweise so ausgestaltet, dass Ritzelachsen der Ritzel relativ zu dem Maschinengestell fix angeordnet sind und die Antriebskette relativ zu den betreffenden Ritzeln quer, d.h. zumindest im Wesentlichen senkrecht zu ihrer Längsrichtung in dem betreffenden Abschnitt, mittels des jeweiligen Schaltelements beweglich, insbesondere verschiebbar, ist. Diese Bewegung bzw. Verschiebung der Antriebskette erfolgt dabei typischerweise in einem Moment nur in einem gerade geschalteten Förderabschnitt der Antriebskette, also in einem Abschnitt der Antriebskette der sich in der Eingriffsstellung befindet, wohingegen die vor- und nachgelagerten Förderabschnitte der Antriebskette während des Schaltvorgangs in dem betreffenden Förderabschnitt - in eine Richtung quer zu der Kettenlängsrichtung betrachtet - unbewegt bzw. unverschoben verbleiben oder zumindest verbleiben können. Es kann somit bei einem durch ein Schaltelement ausgelösten Schaltvorgang zu einer Auslenkung der Antriebskette quer zu ihrer Längsrichtung im Sinne eines Durchhängens oder Ausbeulens kommen, wobei die Schwerkraft zumindest unterstützend bei der Kettenüberführung in die eine oder andere Richtung des Schaltvorgangs wirken kann.

Die erfindungsgemäße Rollenbahn hat viele Vorteile. Es hat sich herausgestellt, dass zwischen der zumindest einen Antriebskette und den jeweiligen Ritzeln ein guter Kraftschluss hergestellt werden kann, um eine Kraftübertragung von der zumindest einen Antriebseinrichtung über die umlaufende Antriebskette und die Ritzel auf die Förderrollen zu bewirken. Ferner hat es sich als besonders vorteilhaft erwiesen, dass ein Ein- und Ausschalten des Kraftschlusses zwischen der Antriebskette und den Förderrollen im Wege einer Kettenverlagerung von Vorteil ist. Es kann somit bewirkt werden, dass bei Stillstand eines vorangehenden Fördergutes, die Drehbewegung der Förderrollen gestoppt wird. Folglich können die nachfolgenden Fördergüter nicht weiter gegen das stillstehende Fördergut drücken, sodass ein ungewollter Weitertransport des vorangehenden Fördergutes und daraus resultierende Schäden oder Verletzungen verhindert werden können.

Erfindungsgemäß hat sich herausgestellt, dass eine Überführung der Antriebskette selbst von einer Eingriffsstellung in eine Freilaufstellung und umgekehrt besonders vorteilhaft ist, da die Ritzel in der Freilaufstellung nicht weiter belastet werden und somit ein Verschleiß der einzelnen Komponenten minimiert werden kann. Ein Weiterlaufen der Antriebskette in der Freilaufstellung führt zu keinem nennenswerten weiteren Verschleiß der Antriebskette und ist ohnehin zum weiteren Betrieb der nicht abgeschalteten Förderabschnitte der Rollenbahn erforderlich. Zudem hat sich herausgestellt, dass die erfindungsgemäße Ausgestaltung der Rollenbahn wenig störanfällig ist und somit die Wirtschaftlichkeit der Rollenbahn somit gegenüber den aus dem Stand der Technik bekannten Rollenbahnen verbessert ist.

Die erfindungsgemäße Rollenbahn ist zur Förderung von Fördergut, insbesondere diskreten Ladungsträgern, vorgesehen. Der Begriff "diskrete Ladungsträger" bezieht sich gemäß dieser Anmeldung beispielsweise auf Paletten oder Wannen oder andere "Träger", mittels dessen zu förderndes Gut transportiert werden kann. Es ist denkbar, dass zum Beispiel eine Mehrzahl an Getränkekästen auf einem Ladungsträger angeordnet sind, sodass die Mehrzahl der Getränkekästen auf dem Ladungsträger parallel und zeitgleich von der Rollenbahn gefördert werden. Alternativ ist es jedoch auch denkbar, dass das Fördergut selbst von Getränkekisten gebildet wird und unmittelbar auf der Rollenbahn angeordnet ist. Andere Fördergüter, welche für sich allein oder mit den entsprechenden Ladungsträgern transportiert werden können, sind selbstverständlich ebenfalls denkbar.

Im Sinne der vorliegenden Anmeldung sind in dem Maschinengestell sämtliche Komponenten der Rollenbahn integriert, als Beispiel seien hier Förderrollen, Führungselemente, eine Vielzahl von Ritzeln, eine umlaufende Antriebskette und mindestens eine Schalteinrichtung genannt. Die hier genannten Komponenten sind rein exemplarischer Natur. Weitere hier nicht aufgeführte Komponenten sind entsprechend ebenfalls denkbar. Vorzugsweise ist das Maschinengestellt auf einem Untergrund, z.B. einem Hallenboden, angeordnet, vorzugsweise fest mit diesem verbunden.

Mittels der mindestens einen Schalteinrichtung kann ein Kraftschluss zwischen der Antriebskette und den Förderrollen ein- und ausschaltbar sein. Die Schalteinrichtung weist zumindest ein Schaltelement auf, welches dazu vorgesehen und eingerichtet ist, von seiner Passivstellung in seine Aktivstellung und umgekehrt überführt zu werden. Das heißt, dass Schaltelement ist von seiner Passivstellung in seine Aktivstellung und umgekehrt überführbar.

Mit dem Begriff "Förderrichtung" ist im Sinne der vorliegenden Anmeldung die Richtung zu verstehen, in die ein Fördergut von einem Punkt zu einem nächsten Punkt gefördert wird. Die Förderrichtung ist von der Drehrichtung der Förderrollen abhängig, wobei die Förderrollen sinnvollerweise alle eine gleiche Drehrichtung, beispielweise im Uhrzeigersinn oder gegen den Uhrzeigersinn, aufweisen.

Gemäß der vorliegenden Anmeldung bilden die nach oben gerichteten Oberflächen der Förderrollen gemeinsam eine Rollenebene aus, die eine Förderebene definiert. Die "nach oben gerichteten Oberflächen" sind im Sinne der vorliegenden Anmeldung von einer Linie einer Mantelfläche einer jeden Förderrolle gebildet, wobei die Linien der jeweiligen Förderrollen gemeinsam die Rollenebene bilden.

Die "Förderebene" ist im Sinne der vorliegenden Anmeldung die Ebene, auf der die Fördergüter transportiert werden. Das heißt, es ist die Ebene, die in einem unmittelbaren Kontakt mit einer Unterseite der Fördergüter steht.

Die Förderrollen sind annährend horizontal ausgerichtet. Diese "annährend horizontale Ausrichtung" ist im Sinne der vorliegenden Anmeldung so zu verstehen, dass Abweichungen der Achsausrichtung um bis zu 3 Grad ebenfalls abgedeckt sind.

Die Förderrichtung des Fördergutes ist von der Drehrichtung der Förderrollen abhängig, wobei die Förderrollen sinnvollerweise alle eine gleiche Drehrichtung, beispielweise im Uhrzeigersinn oder gegen den Uhrzeigersinn, aufweisen.

Die Rollenbahn umfasst eine Vielzahl von antreibbaren zylinderförmigen Förderrollen, wobei die Förderrollen vorzugsweise langgestreckt ausgeformt sind. Eine Länge der nach oben gerichteten Oberflächen der Förderrollen, also eine Breite der Förderebene, entspricht vorzugsweise mindestens einer Länge oder Breite des Fördergutes. Dies bringt den Vorteil mit sich, dass keine exakte Positionierung der Fördergutes auf der Förderebene erforderlich ist.

Die Ritzel sind jeweils koaxial zu einer zugeordneten Förderrolle sowie an deren Stirnseite oder - in axiale Richtung versetzt außerhalb einer vertikalen Projektion der Rollenbahn - neben deren Stirnseite sowie vorzugsweise außerhalb eines von der Rollenbahn definierten Förderquerschnitts angeordnet sind. Das heißt, dass die Ritzel optional als Verlängerung der Drehachsen der jeweiligen Förderrollen unmittelbar neben der Stirnseite angeordnet sein können. Alternativ liegen die Ritzel in einem Abstand zu der Stirnseite auf einer Verlängerung der Drehachse der Förderrolle. Die Lagerung außerhalb der vertikalen Projektion bringt den Vorteil mit sich, dass die Ritzel vor den Fördergütern und umgekehrt geschützt angeordnet sind. Zudem ist die Zugänglichkeit der Ritzel für Wartungszwecke sehr gut. Bei der Anordnung der Ritzel können diese beispielsweise auf einem reduzierten Durchmesser der Förderrolle außerhalb der Förderebene angeordnet sein, sodass zumindest ein Ritzel auf diesen reduzierten Abschnitt schiebbar, z.B. pressgepasst oder mittels Formschluss (Vielzahn, Passfeder, etc.), ist.

Besonders vorteilhaft ist es, wenn jeder Förderrolle zumindest ein Ritzel zugeordnet ist. Das Ritzel ist vorteilhafterweise derart mit der zugeordneten Förderrolle verbunden, dass eine von der Antriebseinrichtung dem Ritzel bereitgestellte Antriebskraft auf die Förderrolle übertragbar ist. Das Ritzel sowie die zugeordnete Förderrolle weisen vorzugsweise die gleiche Drehzahl auf, was bei einer starren Kopplung der Fall ist.

Eine alternative Ausführungsform sieht vor, dass nicht jeder Förderrolle ein Ritzel zugeordnet ist, sondern ein Teil der Förderrollen als freilaufende Rollen ausgeführt sind.

Die "Antriebskette" besteht im Sinne der vorliegenden Anmeldung aus einer Vielzahl, in der Regel mehreren Hundert, beweglich ineinandergefügten Gliedern, wobei die Glieder unmittelbar oder mittelbar über Gelenke miteinander verbunden sind. Es sind Ketten sämtlicher Art denkbar.

Der "Kraftschluss zwischen der Antriebskette und den Förderrollen" gemäß dieser Anmeldung ist so zu verstehen, dass die Antriebskette bei einem eingeschalteten Kraftschluss derart mit den Förderrollen, vorzugsweise über die Ritzel, verbunden ist, dass eine Kraft und damit ein Drehmoment von der Antriebskette auf die Förderrollen übertragbar ist. Vorliegend wird mittels der Antriebskette eine Drehbewegung der Förderrollen bewirkt, wenn ein Kraftschluss vorliegt.

Im Sinne der vorliegenden Anmeldung ist vorgesehen, dass die Antriebskette in der "Eingriffsstellung" mit mehreren Ritzeln in Eingriff ist, so dass mittels der Antriebseinrichtung ein Drehmoment über die Antriebskette in die dem Schaltelement zugeordneten Ritzel einleitbar ist, und somit eine Rotation der dem Schaltelement zugeordneten Förderrollen bewirkt. Weiterhin ist im Sinne der vorliegenden Anmeldung vorgesehen, dass die Antriebskette in der "Freilaufstellung" mit den dem Schaltelement zugeordneten Ritzeln außer Eingriff ist und zu diesen einen lichten Freilaufabstand aufweist. Das heißt, bei Vorliegen des Schaltelements in seiner Aktivstellung befindet sich die Antriebskette in der Eingriffsstellung, sodass die Antriebskette mit mehreren Ritzeln in Eingriff ist und eine Rotation der dem Schaltelement zugeordneten Förderrollen bewirkt und somit das Fördergut transportieren kann. Bei Vorliegen des Schaltelements in seiner Passivstellung befindet sich die Antriebskette in der Freilaufstellung, in der die Antriebskette mit dem Schaltelement zugeordneten Ritzeln außer Eingriff ist. Es findet sodann keine Förderung des Fördergutes statt.

Im Sinne der vorliegenden Anmeldung ist vorgesehen, dass in einer "Passivstellung" des Schaltelements der Kraftschluss zwischen der Antriebskette und den Förderrollen ausgeschaltet ist. Im Gegensatz dazu ist im Sinne der vorliegenden Anmeldung vorgesehen, dass in der "Aktivstellung" des Schaltelements der Kraftschluss zwischen der Antriebskette und der Förderrolle eingeschaltet ist.

Vorzugsweise sieht die Rollenbahn zumindest zwei Führungselemente vor, die verhindern, dass das Fördergut von einem Verlassen der Rollenbahn in eine Richtung quer zu der Förderrichtung abgehalten wird. Der Begriff "quer" ist so zu verstehen, dass sämtliche Bewegungsrichtungen, die zu einem ungewollten Verlassen des Fördergutes von dem Förderband, mit abgedeckt sind. Es soll entsprechend verhindert werden, dass das Fördergut unbeabsichtigt von der Förderebene herunterrutscht oder -fällt.

Konstruktionstechnisch hat sich herausgestellt, dass es erfindungsgemäß besonders vorteilhaft ist, wenn die Antriebskette bei der Überführung von der Eingriffsstellung in die Freilaufstellung senkrecht zu der durch die Drehachsen der Förderrollen gebildeten Achsebene von den Ritzeln wegbewegt wird. Das heißt, die Antriebskette ist in eine radiale Richtung weg von den zugeordneten Ritzeln bewegbar. Vorzugsweise wird die Antriebskette in eine annährend senkrechte Richtung nach oben oder unten von den Ritzeln wegbewegt. Dies liegt insbesondere darin begründet, dass oberhalb und unterhalb der Ritzel ausreichend Platz für eine Schalteinrichtung sowie eine Querbewegung der Antriebskette gegeben ist. Es hat sich als besonders vorteilhaft herausgestellt, wenn die Antriebskette bei einer Überführung von der Eingriffsstellung in die Freilaufstellung in eine annährend senkrechte Richtung nach unten abgesenkt wird. Dies bringt den Vorteil mit sich, dass die Antriebskette sich aufgrund der Schwerkraft von den Ritzeln weg nach unten absenkt. Es ist somit vorzugsweise kein weiteres Bauelement erforderlich, das die Antriebskette von den Ritzeln wegbewegt, nachdem das Schaltelement durch seine Betätigung des entsprechenden Freiraums geschaffen hat. Stattdessen ist das Schaltelement vorzugsweise derart eingerichtet, dass es die Antriebskette von einer Überführung in die Eingriffsstellung anhebt.

In einer weiteren Ausführungsform der Rollenbahn sind an jeder Förderrolle mehrere Ritzel angeordnet, vorzugsweise sind die Ritzel in axiale Richtung nebeneinander versetzt an einer Stirnseite angeordnet. Die Ritzel können beispielsweise benachbart zueinander angeordnet sein. Denkbar wäre beispielsweise auch, dass die Ritzel von Doppelritzeln gebildet werden. Mittels einer zweiten umlaufenden Antriebskette kann die Kraft- und Leistungsübertragung von der Antriebseinrichtung auf die Ritzel erhöht werden. Es ist ebenfalls denkbar, dass die benachbarten Ritzel von einer zweiten Antriebseinrichtung drehangetrieben werden, die parallel zu der ersten Antriebseinrichtung ausgerichtet ist. Die Kraftübertragung kann dadurch noch weiter verstärkt sowie ein Verschleiß der jeweiligen Komponenten reduziert werden. Insbesondere bei sehr schweren oder großen Fördergütern kann eine derartige Ausführung besonders von Vorteil sein.

Die Erfindung weiter ausgestaltend ist vorgesehen, dass eine Bewegung des Schaltelements im Zuge der Überführung von der Aktivstellung in die Passivstellung oder umgekehrt translatorisch und/oder rotatorisch ist. Bei einer translatorischen Bewegung kann eine Bewegung des Schaltelements entlang einer Geraden oder einer Bahnkurve (z.B. Kulissenbahn) vorgesehen sein. Eine rotatorische Bewegung des Schaltelements sieht eine Bewegung um eine Schwenk- oder Drehachse vor, wobei die Schwenk- oder Drehachse vorzugsweise parallel zu der Drehachse einer Förderrolle angeordnet ist.

Eine weitere vorteilhafte Ausgestaltung der Erfindung sieht vor, dass das Schaltelement eine Schaltnocke ist, wobei vorzugsweise die zumindest eine Schaltnocke derart exzentrisch und um eine Schwenkachse verschwenkbar in dem Maschinengestell gelagert ist, dass ein Wechsel zwischen der Aktivstellung und der Passivstellung durch eine Verschwenkung der Schaltnocke erfolgt. Ein radialer Abstand einer mit der Antriebskette in Kontakt tretenden Kontaktfläche der Schaltnocke von der Schwenkachse ist veränderbar, wodurch ein Abstand der Kontaktfläche von der Drehachse der zugeordneten Förderrolle veränderbar ist. Das Schaltelement in Form einer Schaltnocke bringt den Vorteil mit sich, dass eine bloße Verschwenkung der Schaltnocke bereits zu einer radialen Abstandsänderung zwischen der Kontaktfläche der Antriebskette und der Drehachse der zugeordneten Förderrolle veränderbar ist. Eine derartige Lagerung ist nicht nur sehr gut konstruktionstechnisch umsetzbar, sondern es hat sich herausgestellt, dass hierdurch ein möglichst schneller Wechsel zwischen der Passivstellung und der Aktivstellung möglich ist.

Die Erfindung weiter ausgestaltend ist ein an dem Schaltelement befindliches Rückstellelement vorgesehen, dass das Schaltelement von seiner Passivstellung in seine Aktivstellung oder von seiner Aktivstellung in seine Passivstellung überführt. Zumindest ein erstes Ende des Rückstellelements ist an dem Schaltelement, vorzugsweise lösbar, befestigt. Ein zweites dem ersten gegenüberliegenden Ende des Rückstellelements ist an einem Fixpunkt der Rollenbahn, insbesondere dem Maschinengestell, befestigt, sodass eine Rückstellwirkung auf das Schaltelement in seiner Passivstellung ausgeübt werden kann. Mittels des Rückstellelements kann dann das Schaltelement wieder in seine Aktivstellung überführt werden, ohne dass ein großer Kraftaufwand betrieben werden muss. Selbstverständlich ist es auch denkbar, dass das Rückstellelement derart montiert ist, dass es das Schaltelement von seiner Aktivstellung in seine Passivstellung überführen kann. Sind mehrere Schaltelemente vorhanden, ist vorzugsweise jedem Schaltelement ein Rückstellelement zugeordnet. Vorzugsweise ist das Rückstellelement als Feder ausgebildet.

Erfindungsgemäß ist vorgesehen, dass jeweils mehrere Schaltelemente mittels einer Kopplungseinrichtung miteinander gekoppelt sind, die von einer ersten Schaltstellung, in der sich die jeweils gekoppelten Schaltelemente in der Aktivstellung befinden, in eine zweite Schaltstellung überführbar ist, in der sich die jeweils gekoppelten Schaltelemente in der Passivstellung befinden. Die Schaltelemente werden mittels der Kopplungseinrichtung parallel geschaltet und synchronisiert. Eine Kopplung mehrerer Schaltelemente bringt den Vorteil mit sich, dass größere Abschnitt der Antriebskette zeitgleich von ihrer Eingriffsstellung ihre Freilaufstellung und in umgekehrte Richtung überführt werden können. Ein Anhalten oder Anfahren des auf den Förderrollen befindliches Fördergut kann somit besonders störungsfrei erfolgen. Vorteilhafterweise ist die Förderebene in mehrere Förderabschnitte unterteilt, wobei jedem Förderabschnitt eine derartige Kopplungseinrichtung zugeordnet ist. Die jeweiligen Kopplungseinrichtungen können vorteilhafterweise unabhängig voneinander betätigt werden.

Es hat sich herausgestellt, dass eine Kopplungseinrichtung in Form einer Schaltleiste besonders vorteilhaft ist.

Denkbar wäre, dass der Kopplungseinrichtung ein Rückstellelement zugeordnet ist und/oder jedem Schaltelement ein Rückstellelement zugeordnet ist.

Um den Ablauf des Schaltens weiter zu optimieren, sieht eine weitere erfindungsgemäße Ausgestaltung vor, dass die Kopplungseinrichtung die jeweils gekoppelten Schaltelemente rotatorisch und/oder translatorisch beweglich verbindet, wobei vorzugsweise die Kopplungseinrichtung in eine Richtung parallel zu der Förderrichtung bewegbar ist. Es hat sich als besonders vorteilhaft herausgestellt, wenn eine translatorische Bewegung der Kopplungseinrichtung eine rotatorische Bewegung der ihm zugeordneten Schaltelemente bewirkt. Die der Kopplungseinrichtung zugeordneten Schaltelemente bewegen sich bzw. drehen alle in die gleiche Richtung und synchron und bewirken entsprechend über den ihnen zugeordneten Förderabschnitt eine Überführung der Antriebskette von ihrer Eingriffsstellung in ihre Freilaufstellung oder umgekehrt.

Erfindungsgemäß ist ferner ein Verfahren zum Betrieb einer Rollenbahn zum Fördern von Fördergut, insbesondere in Form von diskreten Ladungsträgern, nach Anspruch 10 vorgesehen. Die Rollenbahn umfasst ein Maschinengestell, eine Vielzahl von antreibbaren, vorzugsweise langgestreckten zylinderförmigen Förderrollen, deren jeweiligen nach oben gerichteten Oberflächen gemeinsam eine Rollenebene bilden, die eine Förderebene definiert, und wobei jede Förderrolle eine vorzugsweise annährend horizontal ausgerichtete Drehachse aufweist, und benachbarte Drehachsen gemeinsam eine Achsebene definieren, zumindest zwei Führungselemente, die die Rollenebene an ihren beiden sich gegenüberliegenden Längsseiten begrenzen und somit das Fördergut von einem Verlassen der Rollenbahn in eine Richtung quer zu einer Förderrichtung abhalten, eine Vielzahl von Ritzeln, die jeweils koaxial zu der zugeordneten Förderrolle sowie an deren Stirnseite oder - in axiale Richtung versetzt außerhalb einer vertikalen Projektion der Rollenebene - neben deren Stirnseite sowie vorzugsweise außerhalb eines von der Rollenebene definierten Förderquerschnitts angeordnet sind, zumindest eine umlaufende Antriebskette, mit der die Ritzel antreibbar sind, zumindest eine Antriebseinrichtung zum Antrieb der Antriebskette, mindestens eine Schalteinrichtung, mit der ein Kraftschluss zwischen der Antriebskette und den Förderrollen ein- und ausschaltbar ist, wobei die Schalteinrichtung zumindest ein Schaltelement aufweist, das dazu vorgesehen und eingerichtet ist, von einer Passivstellung in eine Aktivstellung und umgekehrt überführt zu werden.

Das Verfahren zeichnet sich dadurch aus, dass:
- Im Zuge einer Überführung des Schaltelements von seiner Passivstellung in seine Aktivstellung die Antriebskette von einer Freilaufstellung in eine Eingriffsstellung überführt wird, und umgekehrt,
- Im Zuge der Überführung der Antriebskette von ihrer Freilaufstellung in ihre Eingriffsstellung die Antriebskette mit den Ritzeln in Eingriff gebracht wird und sodann mittels der Antriebseinrichtung ein Drehmoment über die Antriebskette in die Ritzel eingeleitet und eine Rotation der Förderrollen bewirkt wird,
- Im Zuge der Überführung der Antriebskette von ihrer Eingriffsstellung in ihre Freilaufstellung die Antriebskette mit den Ritzeln außer Eingriff gebracht wird, sodass diese einen lichten Freilaufabstand zu den Ritzeln aufweist.

Hieraus ergeben sich die bereits zuvor aufgeführten Vorteile. Insgesamt lässt sich also sagen, dass mittels des erfindungsgemäßen Verfahrens eine zuverlässige Förderung von Fördergut ermöglicht wird. Ebenfalls kann mittels des erfindungsgemäßen Verfahrens ein Stillstand des Förderguts auf der Rollenbahn bewirkt werden, wenn aus irgendeinem Grund ein Weitertransport des Fördergutes auf der Rollenbahn nicht möglich ist. Denkbar wäre hier beispielsweise ein Defekt der Rollenbahn, oder dass ein Weitertransport des Förderguts von der Rollenbahn zu einem weiteren Fördermittel nicht möglich ist. Insbesondere die Bewegung der Antriebskette von den Ritzeln weg, bringt den Vorteil mit sich, dass die Förderrollen und Ritzel in ihrer Position verweilen können und somit ein Verschleiß minimiert werden kann.

Das Verfahren weiter ausgestaltend ist vorgesehen, dass das Schaltelement im Zuge der Überführung von der Aktivstellung in die Passivstellung oder umgekehrt translatorisch und/oder rotatorisch bewegt wird. Sowohl eine translatorische als auch eine rotatorische Bewegung führen zu einem guten Ergebnis der Überführung des Schaltelements von der Aktivstellung in die Passivstellung. Vorzugsweise findet eine Verschwenkung des Schaltelements um eine Schwenkachse statt. Dies bringt den Vorteil mit sich, dass ein gleichmäßiges Abgleiten der Antriebskette von dem ihm zugeordneten Ritzel ermöglicht wird. Ebenso kann die Antriebskette bei der Überführung von der Freilaufstellung in die Eingriffsstellung wieder auf das entsprechende Ritzel gleiten und es findet keine ruckartige Bewegung nach oben oder unter statt. Folglich kann ein optimales Schaltergebnis mit sehr geringer Fehlerquote und minimalen Verschleißerscheinung erreicht werden.

Schließlich ist noch vorgesehen, dass die Antriebskette im Zuge der Überführung der Schaltelemente von seiner Aktivstellung in seine Passivstellung in eine annährend vertikale Richtung aus ihrer Eingriffsstellung von den Ritzeln weg in ihre Freilaufstellung bewegt wird und umgekehrt. Konstruktionstechnisch bedingt, ist ein Bewegung der Antriebskette in annährend vertikale Richtung von Vorteil.

### Ausführungsbeispiel

Die Erfindung ist nachstehend anhand eines Ausführungsbeispiels, das in den Figuren dargestellt ist, näher erläutert. Es zeigt:
- Fig. 1a:: Teilansicht einer erfindungsgemäßen Rollenbahn in einer Passivstellung eines Schaltelements in einer vertikalen Projektion,
- Fig. 1b:: Seitenansicht der Teilansicht gemäß Figur 1a,
- Fig. 2a:: Teilansicht der erfindungsgemäßen Rollenbahn gemäß Figur 1a in einer Aktivstellung des Schaltelements in der vertikalen Projektion,
- Fig. 2b:: Seitenansicht der Teilansicht gemäß Figur 2a,
- Fig. 3:: vergrößerte Teilansicht zweier Schalteinrichtungen in der Aktivstellung des Schaltelements,
- Fig. 4:: vergrößerte Teilansicht zweier Schalteinrichtungen gemäß Figur 3 in der Passivstellung des Schaltelements,
- Fig. 5a bis 5d:: Seitenansicht der erfindungsgemäßen Rollenbahn bei der Überführung des Schaltelements von seiner Aktivstellung in seine Passivstellung.

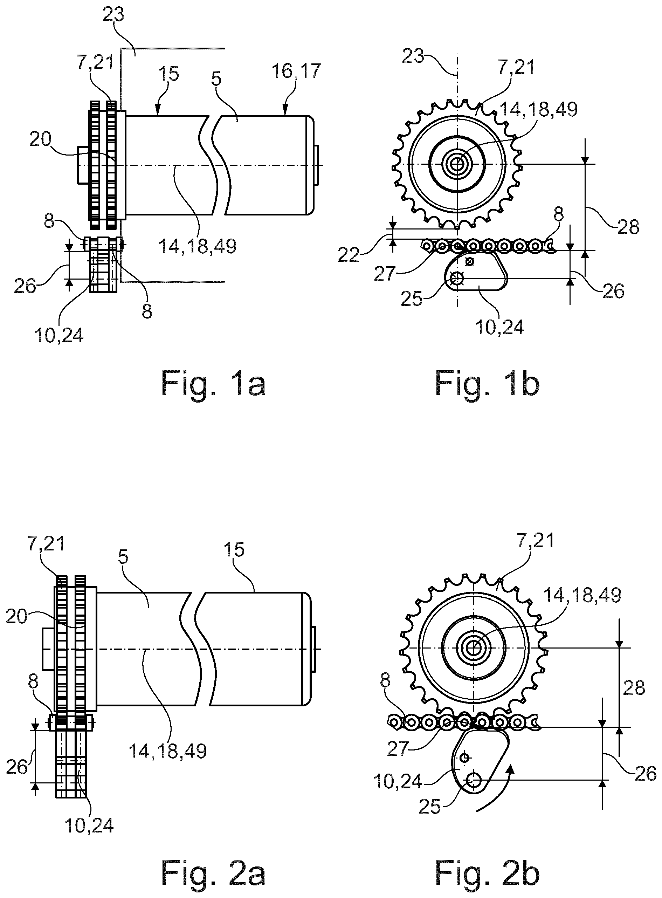

Ein Ausführungsbeispiel, das in den **Figuren 1 bis 5d** dargestellt ist, zeigt eine erfindungsgemäße Rollenbahn **1** zur Förderung von Fördergut **2, 3, 4,** insbesondere in Form von diskreten Ladungsträgern. Die Rollenbahn **1** umfasst ein hier nicht dargestelltes Maschinengestell, eine Vielzahl von Förderrollen **5,** mindestens zwei hier nicht dargestellte Führungselemente, die die Rollenbahn **1** an ihren beiden sich gegenüberliegenden Längsseiten begrenzen. Das Fördergut **2, 3, 4** wird von den Führungselementen von einem Verlassen der Rollenbahn **1** in eine Richtung quer zu einer Förderrichtung **6** abgehalten.

Ferner umfasst die Rollenbahn **1** eine Vielzahl von Ritzeln **7,** eine umlaufende Antriebskette **8,** eine hier nicht dargestellte Antriebseinrichtung zum Antrieb der Antriebskette **8** und mindestens eine Schalteinrichtung **9, 33** mit einem Schaltelement **10.**

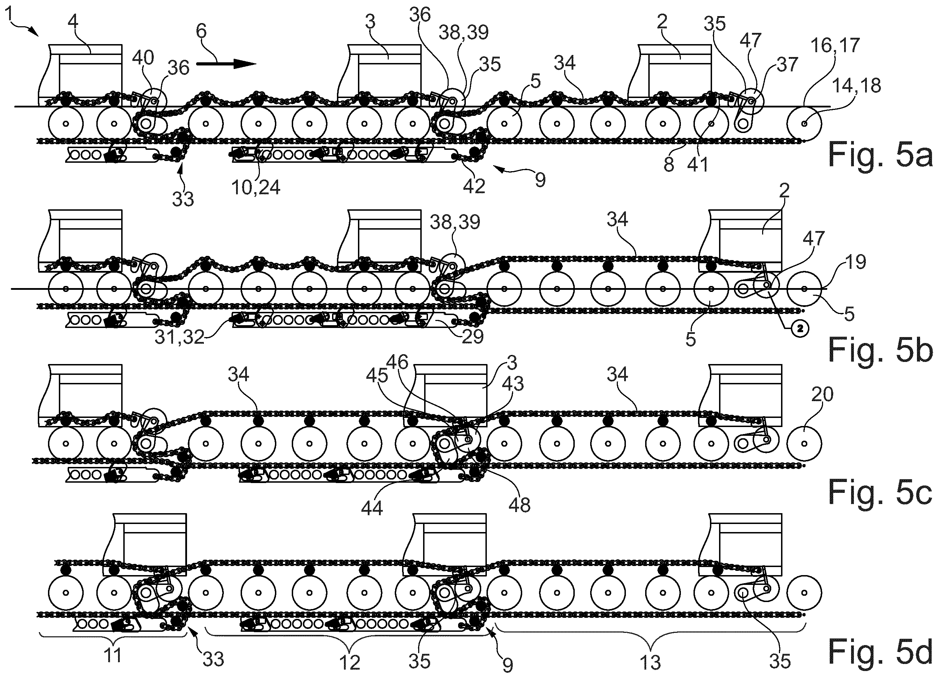

Wie insbesondere den **Figuren 5a bis 5d** entnommen werden kann, ist die nur in einem Teil ihrer gesamten Länge gezeigte Rollenbahn **1** in diesem Ausführungsbeispiel in drei in Förderrichtung **6** betrachtet aneinander angrenzende Förderabschnitte **11, 12, 13** unterteilt, wobei jeder Förderabschnitt **11, 12 ,13** für sich jeweils eine Vielzahl von Förderrollen **5** und eine entsprechende Vielzahl von Ritzeln **7** umfasst. Die beiden Förderabschnitte **11** und **12** umfassen jeweils eine Schalteinrichtung **9, 33.** Der Förderabschnitt **13** weist ebenfalls eine hier nicht dargestellte Schalteinrichtung auf. Nach diesem Förderabschnitt **13** verlässt das jeweilige Fördergut **2, 3, 4** die Rollenbahn **1.** In anderen hier nicht dargestellten Ausführungsformen sind auch mehr oder weniger Förderabschnitte denkbar.

Die **Figuren 1a und 2a** zeigen jeweils eine Teilansicht der Rollenbahn **1** in einer vertikalen Projektion **23.** Die Förderrolle **5,** welche hier als Beispiel für viele nebeneinander angeordnete Förderrollen **5** näher beschrieben wird, ist langgestreckt und zylinderförmig ausgebildet. Mehrere nebeneinander angeordnete Förderrollen **5** sind derart zueinander benachbart angeordnet, dass deren Längsachsen **14** horizontal und parallel zueinander angeordnet sind. Nach oben gerichtete Oberflächen **15** (Linienkontakt) der Förderrollen **5** bilden gemeinsam eine Rollenebene **16,** die eine Förderebene **17** definiert, wie den **Figur 5a bis 5d** entnommen werden kann. Jede Förderrolle **5** weist eine annährend horizontal ausgerichtete Drehachse **18,** die vorzugsweise koaxial zu der jeweiligen Längsachse **14** angeordnet ist, auf, wobei die benachbarten Drehachsen **18** der benachbarten Förderrollen **5** gemeinsam eine Achsebene **19** definieren.

An einer Stirnseite **20** der Förderrolle **5** ist in diesem Ausführungsbeispiel das Ritzel **7** in Form eines Doppelritzels **21** angeordnet, wobei hier und vorzugsweise an jeder Förderrolle **5** stirnseitig ein solches Doppelritzel **21** angeordnet ist. Eine Ritzelachse **49** ist koaxial zu einer Drehachse **18** der Förderrolle **5** angeordnet. Das Ritzel **7** ist koaxial zu der zugeordneten Förderrolle **5** an deren Stirnseite **20** angeordnet. Das Ritzel **7** ist in axiale Richtung versetzt außerhalb der vertikalen Projektion **23** der Rollenebene **16** neben der Stirnseite **20** angeordnet ist. Bei beiden Ausführungsformen ist das Ritzel **7** außerhalb der von der Rollenebene **16** definierten Förderebene **17** angeordnet. Denkbar ist auch, hier allerdings nicht dargestellt, dass jeder Förderrolle nur ein Ritzel zugeordnet ist oder jeder Förderrolle mehrere Ritzel zugeordnet sind. Mehrere Ritzel sind dann vorzugsweise in axiale Richtung nebeneinander versetzt an einer Stirnseite angeordnet.

Die Ritzel **7** werden von der zumindest einen umlaufenden Antriebskette **8,** im vorliegenden Ausführungsbeispiel von zwei umlaufenden Antriebsketten **8** angetrieben, wobei jede Antriebskette **8** einem Ritzel **7** des Doppelritzels **21** zugeordnet ist.

Die erfindungsgemäße Rollenbahn **1** umfasst ferner die Schalteinrichtung **9, 33,** mit der der Kraftschluss zwischen der Antriebskette **8** und den Förderrollen **5** ein- und ausschaltbar ist. Die Schalteinrichtung **9, 33** weist zumindest ein Schaltelement **10** auf, wie den **Figuren 1a bis 2b** zu entnehmen ist.

Das Schaltelement **10** wird in den **Figuren 1a und 1b** in seiner Passivstellung gezeigt, in der der Kraftschluss zwischen der Antriebskette **8** und der Förderrolle **5** ausgeschaltet ist. Die Antriebskette **8** befindet sich in einer Freilaufstellung, in der die Antriebskette **8** in einem Freilaufabstand **22** zu den jeweiligen Ritzeln **7** angeordnet ist. Es findet keine Kraftübertragung von der Antriebseinrichtung auf die Ritzel **7** statt.

In den **Figuren 2a und 2b** ist das Schaltelement **10** wiederum in seiner Aktivstellung gezeigt, in der der Kraftschluss zwischen der Antriebskette **8** und der Förderrolle **5** vorliegt. Die Antriebskette **8** befindet sich entsprechend in ihrer Eingriffsstellung, in der sie mit mehreren Ritzeln **7** in Eingriff ist. Folglich wird mittels der Antriebseinrichtung ein Drehmoment über die Antriebskette **8** in die dem Schaltelement **10** zugeordneten Ritzel **7** übertragen, sodass eine Rotation der dem Schaltelement **10** zugeordneten Förderrolle **5** bewirkt wird.

Das Schaltelement **10** ist derart eingerichtet, dass es von seiner Passivstellung in seine Aktivstellung und umgekehrt überführt werden kann, wie später noch anhand von **Figuren 5a bis 5b** erläutert wird.

Um die Antriebskette **8** von ihrer Eingriffsstellung in die Freilaufstellung zu überführen, ist vorgesehen, dass die Antriebskette **8** senkrecht zu der durch die Drehachsen **18** der Förderrollen **5** gebildeten Achsebenen **19** von den Ritzeln **7** wegbewegt wird. Ebenso ist bei der Überführung der Eingriffsstellung in die Freilaufstellung vorgesehen, dass die Antriebskette **8** senkrecht zu der durch die Drehachsen **18** der Förderrollen **5** gebildeten Achsebenen **19** zu den Ritzeln **7** hinbewegt wird.

Eine Überführung des Schaltelements **10** von seiner Passivstellung in seine Aktivstellung und umgekehrt erfolgt in diesem Ausführungsbeispiel rotatorisch.

Das Schaltelement **10** in Form einer Schaltnocke **24** ist derart exzentrisch und um eine Schwenkachse **25** verschwenkbar in dem Maschinengestell gelagert, dass ein Wechsel zwischen der Aktivstellung und der Passivstellung durch eine Verschwenkung der Schaltnocke **24** erfolgt. Die Schwenkachse **25** ist hier und vorzugsweise parallel zu den Längsachsen **14** der Förderrollen 5 und entsprechend senkrecht zu Förderrichtung **6** angeordnet. Ein radialer Abstand **26** zwischen einer mit der Antriebskette **8** in Kontakt tretenden Kontaktfläche **27** der Schaltnocke **24** und der Schwenkachse **25** ist veränderbar. Das heißt, dass ein Abstand **28** zwischen der Kontaktfläche **27** zu der der Förderrolle **5** zugeordneten Drehachse **18** veränderbar ist. Entsprechend ändert sich ein Abstand der auf den Schaltnocken **24** liegenden Antriebskette **8** zu den Ritzeln **7** je nach Position der Schaltnocke **24.**

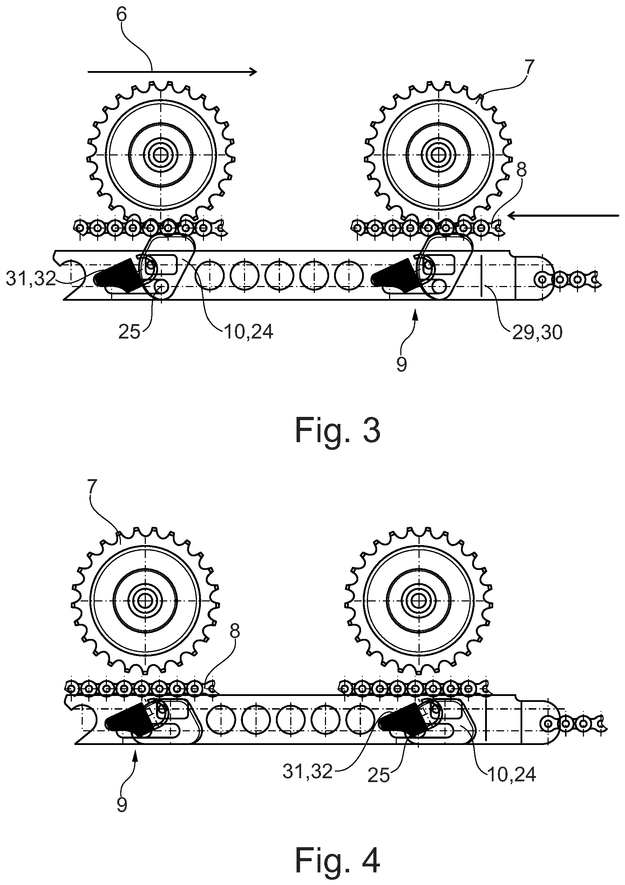

Wie insbesondere den **Figuren 3 bis 5d** entnommen werden kann, sind jeweils mehrere Schaltelemente **10** mittels einer Kopplungseinrichtung **29** miteinander gekoppelt sind. Die Kopplungseinrichtung **29** kann von einer ersten Schaltstellung, in der sich die jeweils gekoppelten Schaltelemente **10** in der Aktivstellung befinden (**Figur 3****,** **5a und 5b**), in eine zweite Schaltstellung überführt werden, in der sich die jeweils gekoppelten Schaltelemente **10** in der Passivstellung befinden (**Figur 4****, Förderabschnitt 12 in** **Figuren 5c und 5d**).

Wie den **Figuren 3 bis 5d** zu entnehmen ist, ist die Kopplungseinrichtung **29** in Form einer Schaltleiste **30** ausgeführt. Um nunmehr das Schaltelement **10** von seiner ersten Schaltstellung in seine zweite Schaltstellung und umgekehrt zu überführen, sind die jeweiligen Schaltelemente **10** derart beweglich mit der Kopplungseinrichtung **29** verbunden sind, dass eine translatorische Bewegung der Kopplungseinrichtung **29** eine rotatorische Bewegung der jeweils zugeordneten Schaltelemente **10** bewirkt. Die translatorische Bewegung der Kopplungseinrichtung **29** erfolgt in eine horizontale Richtung parallel zu der Förderrichtung **6.**

Die mit der Antriebskette **8** in Kontakt tretenden Kontaktflächen **27** der Schaltelemente **10** sind je nach Stellung der Kopplungseinrichtung **29** in unterschiedlichen Abständen zu den zugeordneten Ritzeln 7 angeordnet. Aufgrund einer Parallelschaltung der Schaltelemente **10** mittels der Kopplungseinrichtung **29** sind die Abstände zwischen den gleichgeschalteten Kontaktflächen **27** der Schaltelemente **10** und den Ritzeln **7** nahezu identisch.

An dem jeweiligen Schaltelement **10** ist jeweils ein Rückstellelement **31** in Form einer Feder **32** gebildet, angeordnet, wie den **Figuren 3 und 4** entnommen werden kann. Bei einer translatorischen Bewegung der Kopplungseinrichtung **29** in Förderrichtung **6** und der damit verbundenen Verschwenkung des Schaltelements **10** wird das Rückstellelement **31** gespannt. Eine Entspannung der Feder **32** bewirkt, dass das zugehörige Schaltelement **10** wieder in seine Aktivstellung überführt und das Schaltelement **10** zurück in seine Ausgangstellung bewegt wird.

Die **Figuren 5a bis 5d** zeigen die erfindungsgemäße Rollenbahn **1** mit mehreren Förderabschnitten **11, 12 ,13.** In diesem Ausführungsbeispiel ist der zweite Förderabschnitt **13** in Förderrichtung **6** betrachtet der letzte dargestellte Förderabschnitt **13.** Der zweite Förderabschnitt **13** ist in Förderrichtung **6** betrachtet dem ersten Förderabschnitt **12** nachgelagert angeordnet und ein "nullter" Förderabschnitt **11** ist wiederum vorgelagert zu dem ersten Förderabschnitt **12** angeordnet. Eine erste Schalteinrichtung **9** ist dem ersten Förderabschnitt **12** und eine zweite Schalteinrichtung **33** ist dem nullten Förderabschnitt **11** zugeordnet.

Jede Schalteinrichtung **9, 33** weist mehrere Schaltelemente **10,** eine Kopplungseinrichtung **29,** ein Zugmittel **34** und eine Betätigungseinrichtung **35, 36** auf. Die Schaltelemente **10** werden jeweils von einer Schaltnocke **24** gebildet, die den zuvor dargelegten Ausführungen zu **Figuren 1a bis 4**entsprechen. Die Kopplungseinrichtung **29** koppelt die Schaltnocken 24 miteinander, sodass eine in Förderrichtung 6 betrachtete translatorische Bewegung der Kopplungseinrichtung 29 eine Überführung der Schaltnocken 24 von ihrer Aktivstellungstellung in ihre Passivstellung bewirkt. Eine translatorische Bewegung der Kopplungseinrichtung 29 entgegen der Förderrichtung 6 führt zu einer Überführung der Schaltnocken 24 von ihrer Passivstellung in ihre Aktivstellung führen, wobei die translatorische Bewegung entgegen der Förderrichtung **6** auch durch die den Schaltelementen **10** zugeordnete Rückstellelemente **31,** in Form von beispielsweise Federn **32,** ausgelöst werden kann, wie beispielsweise den **Figuren 3 und 4** zu entnehmen ist. Das Zugmittel **34** wird von einer Schaltkette gebildet.

Die Betätigungseinrichtungen **35, 36** weisen jeweils eine Vorauslöseeinrichtung **37, 38** und jeweils eine Auslöseeinrichtung **39, 40** auf. Eine erste Betätigungseinrichtung **35** umfasst eine erste Vorauslöseeinrichtung **37** und eine erste Auslöseeinrichtung **39,** mit denen gemeinsam die erste Schalteinrichtung **9** betätigbar ist. Die Betätigungseinrichtungen **35, 36** umfassen eine Schaltrolle **43** mit einer Spannscheibe **44** und einem Spannhebel **45,** sowie eine Rückstelleinrichtung **46.** Die Spannscheibe **44** und der Spannhebel **45** sind exzentrisch in dem Maschinengestell gelagert.

Ein erstes Ende **41** des Zugmittels **34** ist mit der ersten Vorauslöseeinrichtung **37** und ein zweites dem ersten gegenüberliegendes Ende **42** des Zugmittels **34** ist mit der Kopplungseinrichtung **29** verbunden. Das Zugmittel **34** umläuft zudem die erste Auslöseeinrichtung **39.**

Die erste Auslöseeinrichtung **39** der ersten, dem ersten Förderabschnitt **12** zugeordneten, Betätigungseinrichtung **35** ist ebenfalls eine zweite Vorauslöseeinrichtung **38,** die der zweiten Betätigungseinrichtung **36** des nullten Förderabschnitts **11** zugeordnet ist.

In der **Figur 5a** werden Fördergüter **2, 3, 4** auf der Förderebene **17** über die Förderrollen **5** in Förderrichtung **6** transportiert. Die Kopplungseinrichtung **29** befindet sich in ihrer ersten Schaltstellung. Die Schaltelemente **10** befinden sich folglich in ihrer Aktivstellung, wodurch zwischen der Antriebskette **8** und den jeweiligen Förderrollen **5** durch Eingriff in die Ritzel **7** ein Kraftschluss gegeben ist. Die Antriebskette **8** befindet sich entsprechend in ihrer Eingriffsstellung. Die erste Betätigungseinrichtung **35** befindet sich wiederum in ihrer Ausgangsstellung, in der das Zugmittel **34** entspannt in seiner Ruhestellung vorliegt und die Vorauslöseeinrichtung **37** und die Auslöseeinrichtung **39** der Betätigungseinrichtung **35** zumindest teilweise über die Förderebene **17** hinausragen.

In der **Figur 5b** überfährt das erste Fördergut **2** ein Vorauslöseelement **47** der ersten Vorauslöseeinrichtung **37,** sodass das Vorauslöseelement **47** aktiviert und in seine Vorauslösestellung überführt wird. Das Vorauslöseelement **47** ist sodann unterhalb der Förderebene **17** zwischen zwei Förderrollen **5** angeordnet. Solange sich das erste Fördergut **2** nicht weiterbewegt, verbleibt das Vorauslöseelement **47** in der abgesenkten Stellung. Das Zugmittel **34** befindet sich dabei in einem Zwischenzustand, in dem das Zugmittel **34** vorgespannt ist, aber noch keinen Zug auf die Kopplungseinrichtung **29** ausübt.

In der **Figur 5c** überfährt das zweite Fördergut **3** ein Auslöseelement **48** der ersten Auslöseeinrichtung **39.** Das Auslöseelement **48** befindet sich sodann in seiner Auslösestellung. Das erste Fördergut **3** steht weiterhin an zuvor beschriebener Stelle, sodass das Zugmittel **34** in seinen Schaltzustand überführt wird. Das Auslöseelement **48** ist nunmehr unterhalb der Förderebene **17** zwischen zwei Förderrollen **5** angeordnet. Gleichzeitig wird die zweite Vorauslöseeinrichtung **38,** die auch der ersten Auslöseeinrichtung **39** entspricht, in ihre Vorauslösestellung überführt. Das Zugmittel **34** der zweiten Betätigungseinrichtung **36** wird in seinen Zwischenzustand überführt.

Befindet sich das Vorauslöseelement **47** in seiner Vorauslösestellung und das Auslöseelement **48** in der Auslösestellung, wird, wie zuvor beschrieben, das Zugmittel **34** derart gespannt, dass die Kopplungseinrichtung **29** in ihre zweite Schaltstellung überführt wird. Das Zugmittel **34** befindet sich sodann in seinem Schaltzustand. Das Zugmittel **34** bewegt die Kopplungseinrichtung **29** translatorisch in Förderrichtung **6.** Dies bewirkt, dass die Schaltelemente **10** derart exzentrisch in dem Maschinengestellt geschwenkt werden, dass die jeweiligen Kontaktflächen **27** der Schaltelemente **10** einen größeren Abstand **28** zu der Drehachse **18** der zugehörigen Förderrollen **5** einnehmen, wodurch sich der Freilaufabstand **22** zwischen der Antriebskette **8** und den Ritzeln **7** auftut. Die Antriebskette **8** befindet sich nun in Bezug auf den ersten Förderabschnitt **12** in ihrer Freilaufstellung. Das auf diesem ersten Förderabschnitt **12** befindliche Fördergut **3** kommt zum Stillstand, da die zugeordneten Förderrollen **5** ausgekoppelt sind.

Die **Figur 5d** zeigt, dass die zweite Schalteinrichtung **33** genau wie die erste Schalteinrichtung **9** durch ein drittes Fördergut **4** ausgelöst wird, sodass die Antriebskette **8** an dem nullten Förderabschnitt **11** von ihrer Eingriffsstellung in ihre Freilaufstellung überführt wird, und das Fördergut **4** auf diesem Förderabschnitt **11** ebenfalls zum Stillstand kommen.

Bei einer Überführung der Antriebskette **8** in dem ersten Förderabschnitt **12** von ihrer Freilaufstellung in ihre Eingriffsstellung wird das erste Fördergut **2** von der ersten Vorauslöseeinrichtung **37** wegbewegt. Über die Rückstelleinrichtung **46,** beispielsweise in Form eine Rückstellfeder, wird die Betätigungseinrichtung **35** in ihre Ausgangsstellung zurückbewegt. Dies hat wiederum zur Folge, dass sich das Zugmittel **34** entspannt. Die an den jeweiligen Schaltelementen **10** befindlichen Rückstellelemente **31** in Form von Federn **32** ziehen die Schaltelemente **10** in ihre Aktivstellung. Die Kopplungseinrichtung **29** wird dadurch in eine Richtung entgegen der Förderrichtung **6** in seine erste Schaltstellung bewegt. Der Freilaufabstand **22** zwischen der Antriebskette **8** und den Ritzeln **7** wird überwunden und es findet eine Kraftübertragung von der Antriebskette **8** auf die Förderrollen **5** statt. Das zweite Fördergut **3** verlässt nunmehr die erste Auslöseeinrichtung **39,** wodurch das Zugmittel **34** der zweiten Betätigungseinrichtung **36** ebenfalls entspannt und somit, wie bereits zum der ersten Betätigungseinrichtung **35** beschrieben, die Antriebskette **8** in dem nullten Förderabschnitt **11** ebenfalls in ihre Eingriffsstellung überführt wird.

### Bezugszeichenliste

- 1: Rollenbahn
- 2: Fördergut
- 3: Fördergut
- 4: Fördergut
- 5: Förderrollen
- 6: Förderrichtung
- 7: Ritzel
- 8: Antriebskette
- 9: Schalteinrichtung
- 10: Schaltelement
- 11: Förderabschnitt
- 12: Förderabschnitt
- 13: Förderabschnitt
- 14: Längsachsen
- 15: Oberflächen
- 16: Rollenebene
- 17: Förderebene
- 18: Drehachse
- 19: Achsebene
- 20: Stirnseite
- 21: Doppelritzel
- 22: Freilaufabstand
- 23: Vertikale Projektion
- 24: Schaltnocke
- 25: Schwenkachse
- 26: Radialer Abstand
- 27: Kontaktfläche
- 28: Abstand
- 29: Kopplungseinrichtung
- 30: Schaltleiste
- 31: Rückstellelement
- 32: Feder
- 33: Schalteinrichtung
- 34: Zugmittel
- 35: Betätigungseinrichtung
- 36: Betätigungseinrichtung
- 37: Vorauslöseeinrichtung
- 38: Vorauslöseeinrichtung
- 39: Auslöseeinrichtung
- 40: Auslöseeinrichtung
- 41: Ende
- 42: Ende
- 43: Schaltrolle
- 44: Spannscheibe
- 45: Spannhebel
- 46: Rückstelleinrichtung
- 47: Vorauslöseelement
- 48: Auslöseelement
- 49: Ritzelachse

## Patentansprüche

1. Rollenbahn (1) zum Fördern von Fördergut (2, 3, 4), insbesondere in Form von diskreten Ladungsträgern, umfassend
- ein Maschinengestell,
- eine Vielzahl von antreibbaren, zylinderförmigen Förderrollen (5), deren jeweiligen nach oben gerichteten Oberflächen (15) gemeinsam eine Rollenebene (16) bilden, die eine Förderebene (17) definiert, und wobei jede Förderrolle (5) eine Drehachse (18) aufweist, und benachbarte Drehachsen (18) gemeinsam eine Achsebene (19) definieren,
- eine Vielzahl von Ritzeln (7), die jeweils koaxial zu der zugeordneten Förderrolle (5) sowie an deren Stirnseite (20) oder - in axiale Richtung versetzt außerhalb einer vertikalen Projektion (23) der Rollenebene (16) - neben deren Stirnseite (20) angeordnet sind,
- zumindest eine umlaufende Antriebskette (8), mit der die Ritzel (7) antreibbar sind,
- zumindest eine Antriebseinrichtung zum Antrieb der Antriebskette (8),
- mindestens eine Schalteinrichtung (9, 33), mit der ein Kraftschluss zwischen der Antriebskette (8) und den Förderrollen (5) ein- und ausschaltbar ist, wobei die Schalteinrichtung (9, 33) zumindest ein Schaltelement (10) aufweist, das dazu eingerichtet ist, von einer Passivstellung in eine Aktivstellung und umgekehrt überführt zu werden,
**dadurch gekennzeichnet, dass**
mittels einer Überführung des Schaltelements (10) von der Aktivstellung in die Passivstellung die Antriebskette (8) von einer Eingriffsstellung in eine Freilaufstellung und umgekehrt überführbar ist,
wobei die Antriebskette (8) in der Eingriffsstellung mit mehreren Ritzeln (7) in Eingriff ist, so dass mittels der Antriebseinrichtung ein Drehmoment über die Antriebskette (8) in die dem Schaltelement (10) zugeordneten Ritzel (7) einleitbar ist, und somit eine Rotation der dem Schaltelement (10) zugeordneten Förderrollen (5) bewirkt, und
wobei die Antriebskette (8) in der Freilaufstellung mit den dem Schaltelement (10) zugeordneten Ritzeln (7) außer Eingriff ist und zu diesen einen lichten Freilaufabstand (22) aufweist.

2. Rollenbahn (1) nach Anspruch 1, **gekennzeichnet durch** zumindest zwei Führungselemente, die die Förderebene (17) an ihrem beiden sich gegenüberliegenden Längsseiten begrenzen und somit das Fördergut (2, 3, 4), von einem Verlassen der Rollenbahn (1) in eine Richtung quer zu einer Förderrichtung (6) abhalten.

3. Rollenbahn (1) nach Anspruch 1 oder 2, **dadurch gekennzeichnet, dass** die Antriebskette (8) bei der Überführung von der Eingriffsstellung in die Freilaufstellung senkrecht zu der durch die Drehachsen (18) der Förderrollen (5) gebildeten Achsebene (19) von den Ritzeln (7) weg bewegt wird.

4. Rollenbahn (1) nach einem der vorherigen Ansprüche, **dadurch gekennzeichnet, dass** an jeder Förderrolle (5) mehrere Ritzel (7) angeordnet sind, vorzugsweise sind die Ritzel (7) in axiale Richtung nebeneinander versetzt an einer Stirnseite (20) angeordnet sind.

5. Rollenbahn (1) nach einem der vorherigen Ansprüche, **dadurch gekennzeichnet, dass** eine Bewegung des Schaltelements (10) im Zuge der Überführung von der Aktivstellung in die Passivstellung oder umgekehrt translatorisch und/oder rotatorisch ist.

6. Rollenbahn (1) nach einem der vorherigen Ansprüche, **dadurch gekennzeichnet, dass** das Schaltelement (10) eine Schaltnocke (24) ist.

7. Rollenbahn (1) nach Anspruch 6, **dadurch gekennzeichnet, dass** die zumindest eine Schaltnocke (24) derart exzentrisch und um eine Schwenkachse (25) verschwenkbar in dem Maschinengestell gelagert ist, dass ein Wechsel zwischen der Aktivstellung und der Passivstellung durch eine Verschwenkung der Schaltnocke (24) erfolgt, wobei ein radialer Abstand (26) zwischen einer mit der Antriebskette (8) in Kontakt tretenden Kontaktfläche (27) der Schaltnocke (24) und der Schwenkachse (25) veränderbar ist, wodurch ein Abstand (28) zwischen der Kontaktfläche (27) und der Drehachse (18) der zugeordneten Förderrolle (5) veränderbar ist.

8. Rollenbahn (1) nach einem der vorherigen Ansprüche, **gekennzeichnet durch** ein an dem Schaltelement (10) angebrachtes Rückstellelement (31), vorzugsweise eine Feder (32), die das Schaltelement (10) von seiner Passivstellung in seine Aktivstellung oder von seiner Aktivstellung in seine Passivstellung überführt.

9. Rollenbahn (1) nach einem der vorherigen Ansprüche, **dadurch gekennzeichnet, dass** jeweils mehrere Schaltelemente (10) mittels einer Kopplungseinrichtung (29) miteinander gekoppelt sind, das von einer ersten Schaltstellung, in der sich die jeweils gekoppelten Schaltelemente (10) in der Aktivstellung befinden, in eine zweite Schaltstellung überführbar ist, in der sich die jeweils gekoppelten Schaltelemente (10) in der Passivstellung befinden.

10. Rollenbahn (1) nach Anspruch 9, **dadurch gekennzeichnet, dass** die Kopplungseinrichtung (29) die jeweils gekoppelten Schaltelemente (10) rotatorisch und/oder translatorisch beweglich verbindet, wobei vorzugsweise die Kopplungseinrichtung (29) in eine Richtung parallel zu der Förderrichtung (6) bewegbar ist.

11. Verfahren zum Betrieb einer Rollenbahn (1) zum Fördern von Fördergut (2, 3, 4), insbesondere in Form von diskreten Ladungsträgern, nach Anspruch 1, wobei die Rollenbahn (1) ein Maschinengestell, eine Vielzahl von antreibbaren, vorzugsweise langgestreckten zylinderförmigen Förderrollen (5), deren jeweiligen nach oben gerichteten Oberflächen (15) gemeinsam eine Rollenebene (16) bilden, die eine Förderebene (17) definiert, und wobei jede Förderrolle (5) eine Drehachse(18) aufweist, und benachbarte Drehachsen (18) gemeinsam eine Achsebene (19) definieren, zumindest zwei Führungselemente, die die Rollenebene (16) an ihren beiden sich gegenüberliegenden Längsseiten begrenzen und somit das Fördergut (2, 3, 4) von einem Verlassen der Rollenbahn (1) in eine Richtung quer zu einer Förderrichtung (6) abhalten, eine Vielzahl von Ritzeln (7), die jeweils koaxial zu der zugeordneten Förderrolle (5) sowie an deren Stirnseite (20) oder - in axiale Richtung versetzt außerhalb einer vertikalen Projektion (23) der Rollenebene (16) - neben deren Stirnseite (20), zumindest eine umlaufende Antriebskette (8), mit der die Ritzel (7) antreibbar sind, zumindest eine Antriebseinrichtung zum Antrieb der Antriebskette (8), mindestens eine Schalteinrichtung (9), mit der ein Kraftschluss zwischen der Antriebskette (8) und den Förderrollen (5) ein- und ausschaltbar ist, wobei die Schalteinrichtung (9) zumindest ein Schaltelement (10) aufweist, das dazu eingerichtet ist, von einer Passivstellung in eine Aktivstellung und umgekehrt überführt zu werden, umfasst,
**gekennzeichnet durch** die folgenden Verfahrensschritte:
a) Im Zuge einer Überführung des Schaltelements (10) von seiner Passivstellung in seine Aktivstellung wird die Antriebskette (8) von einer Freilaufstellung in eine Eingriffsstellung überführt, und umgekehrt,
b) Im Zuge der Überführung der Antriebskette (8) von ihrer Freilaufstellung in ihre Eingriffsstellung wird die Antriebskette (8) mit den Ritzeln (7) in Eingriff gebracht und sodann wird mittels der Antriebseinrichtung ein Drehmoment über die Antriebskette (8) in die Ritzel (7) eingeleitet und eine Rotation der Förderrollen (5) bewirkt.
c) Im Zuge der Überführung der Antriebskette (8) von ihrer Eingriffsstellung in ihre Freilaufstellung wird die Antriebskette (8) mit den Ritzeln (7) außer Eingriff gebracht, sodass diese einen lichten Freilaufabstand (22) zu den Ritzeln (7) aufweist.

12. Verfahren nach Anspruch 11, **dadurch gekennzeichnet, dass** das Schaltelement (10) im Zuge der Überführung von der Aktivstellung in die Passivstellung oder umgekehrt translatorisch und/oder rotatorisch bewegt wird.

13. Verfahren nach Anspruch 11 oder 12, **dadurch gekennzeichnet, dass** die Antriebkette (8) im Zuge der Überführung der Schaltelemente (10) von seiner Aktivstellung in seine Passivstellung in eine annährend vertikale Richtung aus ihrer Eingriffsstellung von den Ritzeln (7) weg in ihre Freilaufstellung bewegt wird und umgekehrt.
